# EUROPEAN PATENT APPLICATION

(11) **EP 3 961 285 A1**
(43) Date of publication of application: **02.03.2022**
(21) Application number: 20211342.9
(22) Date of filing: 02.12.2020
(51) Int. Cl.: G02B 21/00, G02B 21/24, G02B 21/36, G02B 21/18, G02B 15/14, G02B 15/24, G02B 7/10, G02B 21/02, G02B 21/22

(54) **MICROSCOPE, MICROSCOPE SYSTEM AND METHOD FOR IMAGING AN OBJECT USING A MICROSCOPE**

(30) Priority: 28.08.2020 EP 20193458
(71) Applicant: Leica Instruments (Singapore) Pte. Ltd., 608924 Singapore (SG)
(72) Inventor: WEIGER, Ulrich, 9462 Montlingen (CH); GUENTERT, Michael, 9435 Heerbrugg (CH)
(74) Representative: 2SPL Patentanwälte PartG mbB

(57) **Abstract**

Various examples relate to a microscope and to a corresponding microscope system and method for imaging an object using a microscope. The microscope comprises a light path configured to guide light from an objective of the microscope towards an eyepiece of the microscope. The microscope comprises a first, a second and a third reflecting element. The first reflecting element is arranged to guide the light on the light path from a substantially vertical direction to a substantially horizontal direction. The second reflecting element is arranged to guide the light on the light path from a substantially horizontal direction to a substantially vertical direction. The third reflecting element is arranged to guide the light on the light path from a substantially vertical direction to a substantially horizontal direction. The light path comprises a first, second, third and fourth portion. The first portion is located between the objective and the first reflecting element. The second portion is located between the first and the second reflecting element. The third portion is located between the second and the third reflecting element. The fourth portion is located between the third reflecting element and the eyepiece. At least a sub-portion of the second portion and a sub-portion of the fourth portion being arranged in a substantially anti-parallel manner. The microscope comprises a beam-splitting optical element configured to split off a portion of the light guided on the light path towards at least one image sensor assembly of the microscope. The beam-splitting optical element is arranged in the second or third portion of the light path.

## Description

### Technical field

Various examples relate to a microscope and to a corresponding microscope system and method for imaging an object using a microscope.

### Background

Microscopes, and in particular microscopes for use during surgery, provide a number of functionalities that assist the user in various ways during operation of the microscope, e.g. during surgery. At the same time, more and more additional devices are being used in combination with the microscope. In particular, surgical microscopes may be used together with external displays that provide the surgeon with a "surgical cockpit" during surgery. However, due to the amount of functionality being increased, the size of the surgical microscopes tends to grow, leaving little space for the additional devices being used with the surgical microscope, and obstructing a view on the displays of the surgical cockpit.

### Summary

There may be a desire for an improved concept for a microscope, which enables the construction of microscopes having a smaller size.

This desire is addressed by the subject-matter of the independent claims.

Various embodiments of the present disclosure are based on the finding, that the size, or at least the vertical size, which is relevant regarding the field of view of the user of the microscope, can be decreased by using reflecting elements to arrange a light path of the microscope in a meandering fashion. In particular, the reflecting elements are used to guide the light that enters the microscope through the objective in a substantially vertical direction into a substantially horizontal direction to make space for various optical elements in the portion of the optical path that guides the light in the substantially horizontal direction, turn the light path around (using two reflecting elements), and lead the light path back (towards the eyepiece). This way, the optical elements can be included in the portion of the light path that guides the light horizontally, enabling a reduction in the vertical height of the microscope.

Various embodiments of the present disclosure provide a microscope comprising a light path configured to guide light from an objective of the microscope towards an eyepiece of the microscope. The microscope comprises a first, a second and a third reflecting element. The first reflecting element is arranged to guide the light on the light path from a substantially vertical direction to a substantially horizontal direction. The second reflecting element is arranged to guide the light on the light path from a substantially horizontal direction to a substantially vertical direction. The third reflecting element is arranged to guide the light on the light path from a substantially vertical direction to a substantially horizontal direction. The light path comprises a first, second, third and fourth portion. The first portion is located between the objective and the first reflecting element. The second portion is located between the first and the second reflecting element. The third portion is located between the second and the third reflecting element. The fourth portion is located between the third reflecting element and the eyepiece. At least a sub-portion of the second portion and a sub-portion of the fourth portion are arranged in a substantially anti-parallel manner. The microscope comprises a beam-splitting optical element configured to split off a portion of the light guided on the light path towards at least one image sensor assembly of the microscope. The beam-splitting optical element is arranged in the second or third portion of the light path. By splitting up the light path into the four sections, and arranging two of the sections in an anti-parallel manner, a vertical height of the microscope can be reduced. At the same time, the space can be used to arrange optical elements within the light path, such as the beam-splitting optical element.

In various examples, the microscopes comprises an optical zoom element being arranged in the second portion of the light path. Accordingly, the optical zoom element may be included without leading to a full increase in the vertical height of the microscope.

For example, the optical zoom element may be a parfocal zoom system. The parfocal zoom system may be used, such that a real image can be projected on to a surface of an image sensor of the at least one image sensor assembly, without requiring additional optics for focusing the light at the image sensor. Accordingly, the parfocal zoom system may be configured to generate a real image on a surface of the at least one sensor assembly via the beam-splitting optical element.

In general, a beam-splitting optical element, or beam splitter, is used to split up the light into two portions. Accordingly, the beam-splitting optical element may be configured to split the light being guided on the light path into a first portion and a second portion. The real image may be based on the first portion (that is guided towards the at least one image sensor assembly). The microscope may further comprise an optical system configured to receive the second beam portion and guide the second beam portion along the light path (e.g. towards the eyepiece of the microscope).

In general, between the beam-splitting optical element and the eyepiece, the light may be projected into infinity, and then projected back into a converging beam using the optical system. In other words, the optical system may comprise a lens configured to project an intermediate image in the second beam portion to infinity. The optical system may further comprise a tube lens configured to focus the second beam portion to a further intermediate image, and an ocular to view the further intermediate image. For example, the ocular may be part of the eyepiece.

In various examples, the microscope may further comprise a display device configured to output a visual representation of image data captured by the at least one image sensor assembly of the microscope. The image data may be based on a portion of the light that is guided via the light path. The microscope may comprise a second light path configured to guide the visual representation of the image data towards the eyepiece. The microscope may comprise an optical element, configured to provide the light guided via the light path and/or the visual representation of the image data guided via the second light path to the eyepiece. By including the optical element that can be used to select one of the digital or optical view, or that can be used to overlay the digital image over the optical view, a hybrid viewfinder concept is provided.

For example, the optical element may be a moveable mirror configured to provide either the light guided via the first light path or the visual representation of the image data guided via the second light path to the eyepiece. Thus, a user of the microscope is enabled to switch between a purely optical and a purely digital view.

Alternatively, the optical element may be a beam splitter configured to provide the visual representation of the image data guided via the second light path overlaid over the light guided via the first light path to the eyepiece. In this case, a digital overlay may be overlaid over the optical view.

For example, various embodiments provide a microscope system comprising the microscope and a Light Emitting Diode (LED)-based illumination system. The LED-based illumination system may be configured to emit radiation power having at least one peak at a wavelength that is tuned to an excitation wavelength of at least one fluorescent material and/or to emit radiation power across a white light spectrum, with the light emitted across the white light spectrum being filtered such that light having a wavelength (spectrum) that coincides with at least one fluorescence emission wavelength (spectrum) of the at least one fluorescent material is attenuated or blocked. Similar to the three-sensor assembly introduced above, such an illumination system may be used to perform reflectance imaging of light in the visible light wavelength band and fluorescence imaging (with multiple fluorophores) at the same time, while retaining good image quality on the visible light image.

For example, each LED-based light source of the LED-based illumination system may be configured to emit radiation power towards a sample to be observed via the microscope. Each LED-based light source may be arranged adjacent to the objective of the microscope. This may alleviate the need for a light path to be used by the light generated by a remote light source.

Various embodiments of the present disclosure relate to a method for imaging an object using a microscope. The method comprises guiding light from an objective of the microscope towards an eyepiece of the microscope using a light path. The method comprises guiding the light on the light path from a substantially vertical direction to a substantially horizontal direction using a first reflecting element. The method comprises guiding the light on the light path from a substantially horizontal direction to a substantially vertical direction using a second reflecting element. The method comprises guiding the light on the light path from a substantially vertical direction to a substantially horizontal direction using a third reflecting element. The light path comprises a first, second, third and fourth portion. The first portion is located between the objective and the first reflecting element. The second portion is located between the first and the second reflecting element. The third portion is located between the second and the third reflecting element. The fourth portion is located between the third reflecting element and the eyepiece. At least a sub-portion of the second portion and a sub-portion of the fourth portion are arranged in a substantially anti-parallel manner. The method comprises splitting off a portion of the light guided on the light path towards at least one image sensor assembly of the microscope using a beam-splitting optical element. The beam-splitting optical element is arranged in the second, third or fourth portion of the light path.

### Short description of the Figures

Some examples of apparatuses and/or methods will be described in the following by way of example only, and with reference to the accompanying figures, in which
- Figs. 1a and 1b: show schematic diagrams of examples of a microscope;
- Fig. 1c: shows a schematic diagram of an example of a microscope system;
- Fig. 1d: shows a block diagram of a system for a microscope;
- Fig. 2a: shows a schematic diagram of an example of a parfocal zoom system of a microscope;
- Fig. 2b: shows a schematic diagram of an example of a microscope with a parfocal zoom system;
- Fig. 3: shows a schematic diagram of another example of a microscope;
- Fig. 4: shows a schematic diagram of an example of an illumination system for a microscope;
- Fig. 5: shows a flow chart of an example of a method for imaging an object using a microscope; and
- Fig. 6: shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

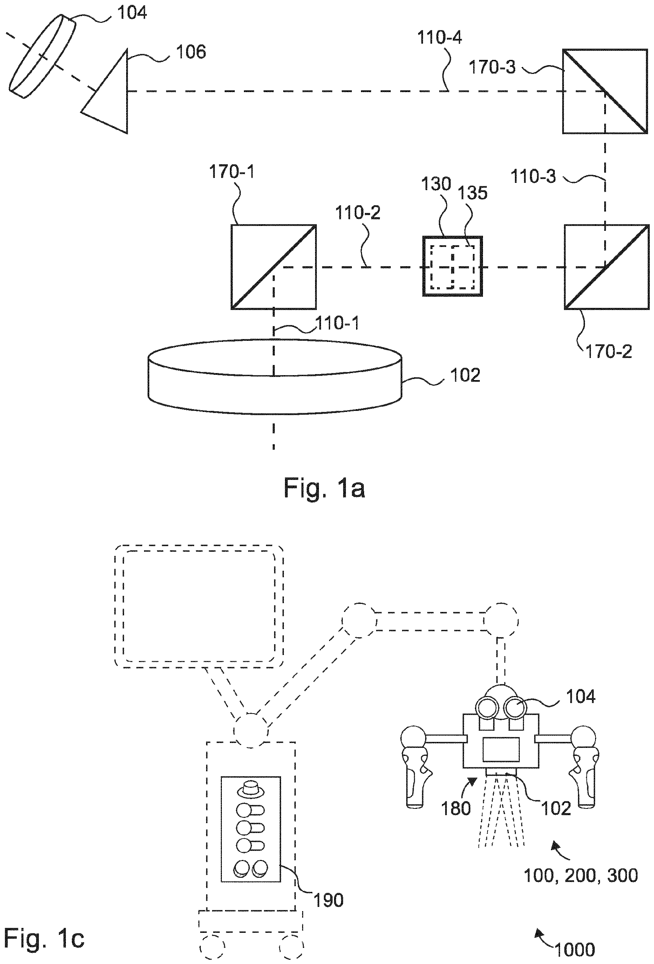

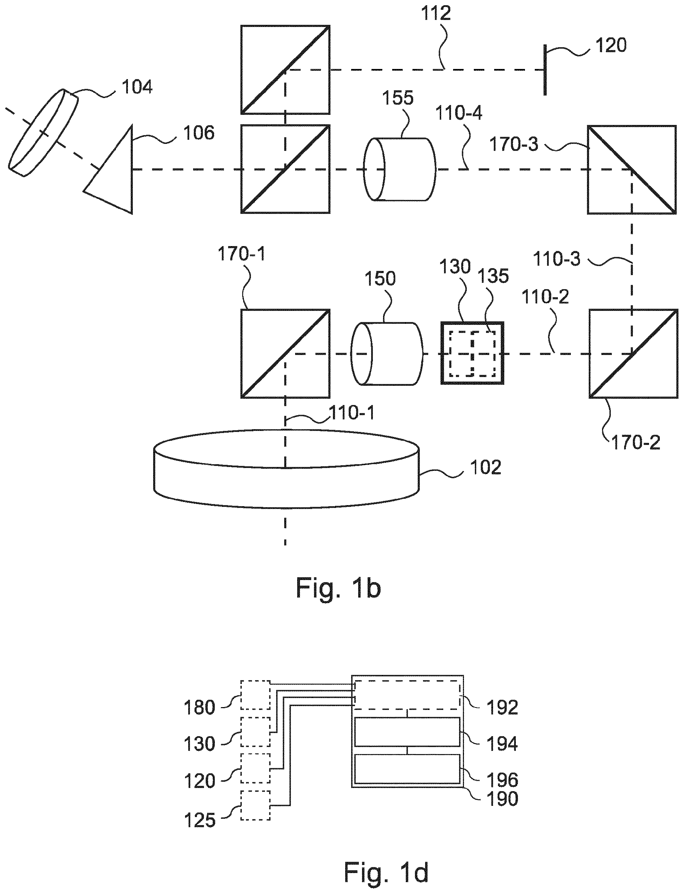

Figs. 1a and 1b show schematic diagrams of examples of a microscope. Fig. 1a shows a microscope 100 comprising a first light path 110 configured to guide light from an objective 102 of the microscope towards an eyepiece 104 of the microscope (via a tube interface 106, which provides an interface for the first light path towards a tube lens of the eyepiece 104). The microscope 100 comprises a first 170-1, a second 170-2 and a third 170-3 reflecting element. The first reflecting element is arranged to guide the light on the first light path from a substantially vertical direction to a substantially horizontal direction. The second reflecting element is arranged to guide the light on the first light path from a substantially horizontal direction to a substantially vertical direction. The third reflecting element is arranged to guide the light on the first light path from a substantially vertical direction to a substantially horizontal direction. The first light path comprises a first 110-1, second 110-2, third 110-3 and fourth 110-4 portion. The first portion is located between the objective and the first reflecting element. The second portion is located between the first and the second reflecting element. The third portion is located between the second and the third reflecting element. The fourth portion is located between the third reflecting element and the eyepiece. At least a sub-portion of the second portion and a sub-portion of the fourth portion are arranged in a substantially anti-parallel manner. The microscope comprises a beam-splitting optical element 135 configured to split off a portion of the light guided on the first light path towards at least one image sensor assembly 130 of the microscope. The beam-splitting optical element is arranged in the second or third portion of the first light path.

In various examples, the microscope is a stereoscopic microscope, providing a stereoscopic view on a sample. Consequently, two parallel beams of light may be guided via the first light path (and also the other light paths), on two parallel light paths of the first light path. In the context of Figs. 1a and 1b, two image sensor assemblies are being used, to separately capture the light guided on the two parallel light paths of the first light path. In other words, due to the first light path comprising two light paths, two image sensor assemblies may be used. However, in some examples, a single image sensor assembly may suffice.

Fig. 1b shows a schematic diagram of another, more feature-rich example of a microscope 100. The microscope comprises the first light path 110 configured to guide light from an objective 102 of the microscope towards an eyepiece 104 of the microscope. The microscope of Fig. 1b further comprises a display device 120 configured to output a visual representation of image data captured by two image sensor assemblies 130 of the microscope. The image data is based on a portion of the light that is guided via the first light path. The microscope of Fig. 1b comprises a second light path 112 configured to guide the visual representation of the image data towards the eyepiece. The microscope of Fig. 1b further comprises an optical element 140, configured to provide the light guided via the first light path and/or the visual representation of the image data guided via the second light path to the eyepiece.

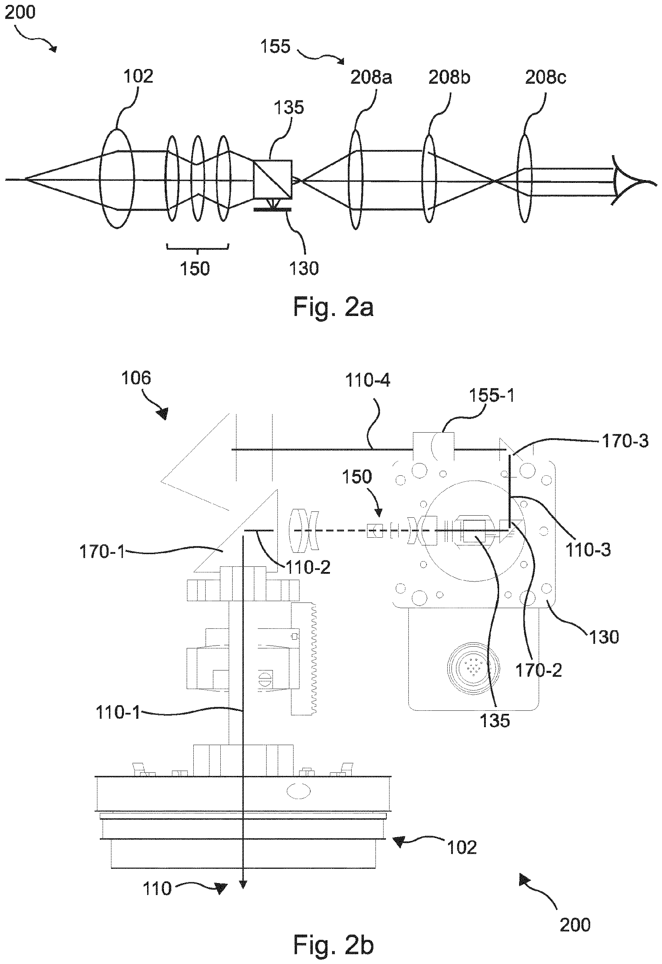

For example, the microscope 100 of Figs. 1a and/or 1b may be part of a microscope system, such as the surgical microscope system 1000 shown in Fig. 1c. Fig. 1c shows a schematic diagram of an example of a surgical microscope system 1000 comprising a microscope, such as the microscope 100 shown in Figs. 1a and/or 1b, or one of the microscopes 200-300, 610 shown in connection with Figs. 2a to 3 and 6. In general, a distinction is made between the actual microscope, and the microscope system comprising the microscope, with the microscope system comprising the microscope and various components that are used in conjunction with the microscope, e.g. a lighting system, an auxiliary display, an arm etc. In a microscope system, the actual microscope is often also referred to as the "optics carrier", as it comprises the optical components of the microscope system. In general, a microscope is an optical instrument that is suitable for examining objects that are too small to be examined by the human eye (alone). For example, a microscope may provide an optical magnification of an object. In modern microscopes, the optical magnification is often provided for a camera or an imaging sensor, such as the two image sensor assemblies 130. The microscope may further comprise one or more optical magnification components that are used to magnify a view on the sample.

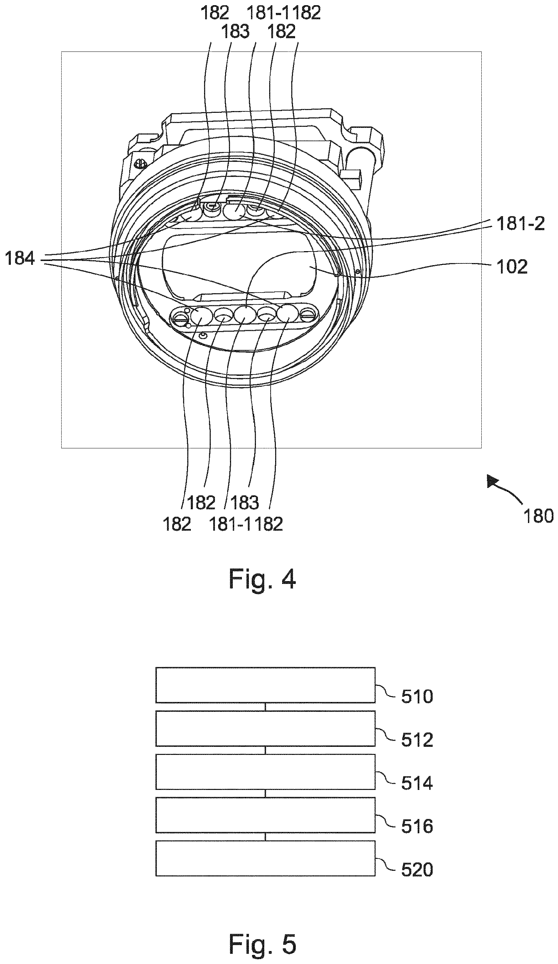

For example, the surgical microscope system 1000 shown in Fig. 1b further optionally comprises an illumination system, such as the Light Emitting Diode (LED)-based illumination system 180 shown in Fig. 1c and 4. For example, the LED-based illumination system may be configured to emit radiation power having at least one peak at a wavelength that is tuned to an excitation wavelength of at least one fluorescent material and/or to emit radiation power across a white light spectrum. The light emitted across the white light spectrum may be filtered such that light having a wavelength (spectrum) that coincides with at least one fluorescence emission wavelength (spectrum) of the at least one fluorescent material is attenuated or blocked. For example, each LED-based light source of the LED-based illumination system may be configured to emit radiation power towards a sample to be observed via the microscope. Each LED-based light source may be arranged adjacent to the objective 102 of the microscope. More details of such an illumination system is introduced in connection with Fig. 5.

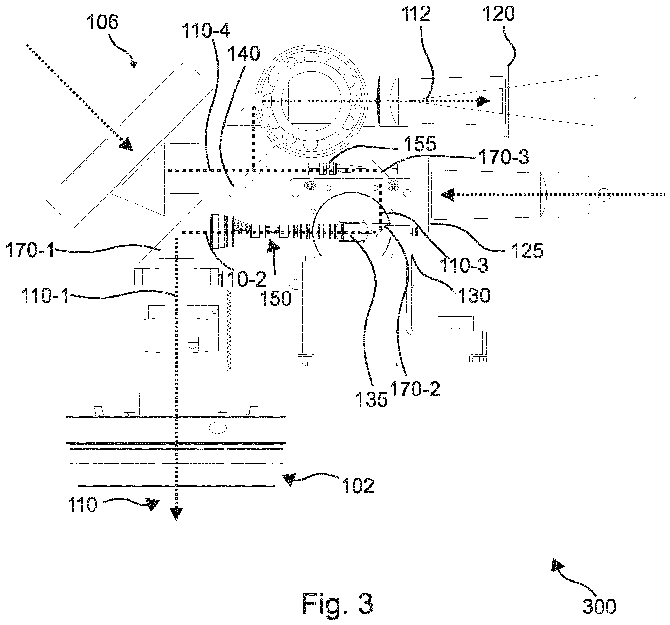

Various examples of the microscope system may further comprise a system 190 for the microscope, i.e. a computer system for the microscope. Fig. 1d shows a schematic diagram of a system for a microscope. In general, the system for the microscope may be coupled with various components of the microscope system and/or of the microscope system, and may be configured to perform data and signal processing for the microscope or microscope system. For example, as shown in Fig. 1c, the system 190 may comprise one or more processors 194 and one or more storage devices 196. Optionally, the system 190 may further comprise an interface 192 for communicating with the other components of the microscope or microscope system. For example, as shown in Fig. 1c, the interface may be configured to communicate with the illumination system 180, with the two or more image sensor assemblies 130, with the display device 120, and/or with a second display device 125 (shown in Fig. 3). Optionally, the interface may also be used to communicate with other components of the microscope system or microscope, such as the arm, an auxiliary display, a touch-screen control display, handles, a foot pedal etc. In general, the functionality of the system 190 may be provided by the one or more processors, e.g. in conjunction with the interface 192 (for exchanging information or signals) and/or with the one or more storage devices (for storing information).

Embodiments of the present disclosure relate to a microscope, and to a microscope system comprising such a microscope (and one or more additional, optional components). There are a variety of different types of microscopes. If the microscope system is used in the medical or biological fields, the object being viewed through the microscope may be a sample of organic tissue, e.g. arranged within a petri dish or present in a part of a body of a patient. For example, the microscope system shown in Fig. 1b is a surgical microscope system, which is a microscope system for use during surgery of a patient. Accordingly, the microscope may be a microscope for use during surgery of a patient. However, the concept is also applicable to other samples, such as samples to be analyzed in material testing.

The microscope comprises a first light path 110 configured to guide light from an objective 102 of the microscope towards an eyepiece 104 of the microscope. In general, the first light path leads from the objective towards the eyepiece (but not necessarily entirely up to the eyepiece). For example, the first light path 110 may extend from the objective (at least) to the optical element 140, or, if no such optical element 140 is present, to the eyepiece 104 (or to the tube interface 106). In various examples, the first light-path, and similarly the second light-path and/or the third light-path, may encompass two (separate) light paths for the two oculars of the eyepiece.

In various examples of the present disclosure, at least a part of the first light path is turned to the side, to decrease the vertical height of the microscope that is required due to the arrangement of the optical components of the microscope. As shown in Figs. 1a to 1b, 2b and 3, the microscope comprises a first 170-1, a second 170-2 and a third 170-3 reflecting element, which are placed in the first light path, and which may guide the light along the first light path. For example, the reflecting elements may be implemented using mirrors. For example, the reflecting elements may be arranged at a 45-degree angle to the light that is guided on the first light path. Consequently, the reflecting elements may be configured to change a direction of a light by approximately 90 degrees (e.g. between 70 degrees and 110 degrees), e.g. from a substantially horizontal direction to a substantially vertical direction, and vice versa. In this context, a horizontal direction is defined perpendicular to a direction of the force of gravity, and a vertical direction is defined in parallel to the force of gravity. The substantially horizontal direction may correspond to the horizontal direction, and the substantially vertical direction may correspond to the vertical direction. However, the substantially horizontal direction may deviate by up to ±10 degrees (or up to ±20 degrees) from the horizontal direction, and the substantially vertical direction may deviate by up to ±10 degrees (or up to ±20 degrees) from the vertical direction. Similarly, a vertical height may be defined in parallel to the force of gravity, and a lateral length/extent may be defined perpendicular to the force of gravity.

The first reflecting element is arranged to guide the light on the first light path (coming from the objective) from a substantially vertical direction to a substantially horizontal direction. In other words, light (e.g. a reflection of light at a sample, or fluorescence emissions emitted by a fluorophore included in the sample) may enter the microscope at the objective, traverse the first light path in a substantially vertical direction (in the first portion of the first light path) until it intersects with the first reflecting element, and then is deflected by the first reflecting element and changes direction to the substantially horizontal direction (in the second portion of the first light path), as shown in Figs. 1a, 1b, 2b and 3. In other words, the first reflecting element may turn the light path on its side.

The second reflecting element is arranged to guide the light on the light path from a substantially horizontal direction to a substantially vertical direction. In other words, the light deflected by the first reflecting element (and thus turned into the substantially horizontal direction) may be guided (in the second portion of the first light path) to intersect with the second reflecting element, which may turn the light into the substantially vertical direction again (as shown in Figs. 1a, 1b, 2b and 3).

The third reflecting element may be arranged to guide the light on the light path from the substantially vertical direction (in the third portion of the light path) to a substantially horizontal direction (back towards the eyepiece). In other words, as shown in Figs. 1a, 1b, 2b and 3, the light may be guided away from a direct geometric axis between the objective and the eyepiece by the first reflecting element, and turned around and back towards the eyepiece by the second and third reflecting elements.

Consequently, the first light is logically divided by the reflecting elements. The first light path comprises the first 110-1, the second 110-2, the third 110-3 and the fourth 110-4 portion (or section), as divided by the reflecting elements. For example, the first portion is located between the objective and the first reflecting element (or extend from the objective to the first reflecting element). The second portion may be located between the first and the second reflecting element (or extend from the first reflecting element to the second reflecting element). The third portion may be located between the second and the third reflecting element (or extend from the second reflecting element to the third reflecting element). The fourth portion may be located between the third reflecting element and the eyepiece (or extend from the third reflecting element to the optical element 140, or to the eyepiece 104 / tube lens interface 106). As shown in Figs. 1a, 1b, 2b and 3, at least a sub-portion of the second portion and a sub-portion of the fourth portion is arranged in a (substantially) anti-parallel manner. For example, an optical axis of the second portion may run (substantially) in parallel to an optical axis of the fourth portion. In other words, at least a sub-portion of the second portion and a sub-portion of the fourth portion may be arranged (horizontally) substantially parallel to each other (i.e. vertically above each other, with the (sub-portions) being arranged substantially in parallel on their respective lateral/horizontal planes), with the direction of light being in opposite directions. In other words, the light may be guided in a first substantially horizontal direction on the second portion of the first light path, and in a second substantially horizontal direction on the fourth portion of the first light path, with the first and second substantially horizontal directions being opposite to each other. In this context, "substantially in parallel" or "substantially in an anti-parallel manner" indicates, that the geometric axes of the respective portions of the light path deviate by at most ±10 degrees (or at most ±20 degrees) from each other, and that the respective sub-portions are arranged vertically on top of each other.

In general, the second and fourth portions may be used to implement optical components without increasing the vertical height of the microscope. Accordingly, the second and fourth portions may be larger than the third portion. For example, a (maximal) lateral extent of the second portion and/or the fourth portion of the first light path may be at least 20% larger (or at least 50% larger, or at least 75% larger, or at least 100% larger) than a maximal vertical height of the third portion of the first light path.

Accordingly, various optical elements may be included in the second, fourth, or third portion of the first light path. For example, the beam-splitting optical element may be arranged in the second, third or fourth portion of the first light path. For example, in Figs. 1a, 1b, 2b and 3, the beam-splitting optical element 135 is arranged in the second portion 110-2 of the first light path.

In the microscope of Fig. 1b, a combination of various optical elements is provided that may provide, on the one hand, a compact implementation of the optics of a hybrid (surgical) microscope, and on the other hand, may overcome drawbacks of other surgical microscopes, such as the recording of a digital overlay by an image sensor of the microscope.

In various examples, the microscope comprises the optical element 140. If the optical element is a moveable/tiltable mirror, the first light path may end at the moveable/tiltable mirror if the mirror is moved into the first light path, and to the eyepiece if the mirror is moved away from the first light path. If the optical element is a beam splitter, in some examples, the first light path may be deemed to end at the optical element 140, as the light path between the optical element and the eyepieces is shared by the visual representation emitted by the display device and the light traversing the first optical light path. In this case, the optical path between the optical element and the eyepiece may be deemed a shared light path. Alternatively, the first light path may be deemed to traverse the optical element 140 and extend to the eyepiece 102. In general, the first light path may be configured to provide a (purely) optical view on a sample being viewed through the microscope.

The display device 120, on the other hand, may be used to provide a purely digital view on the sample being viewed through the microscope, or to provide an overlay to be overlaid over the optical view on the sample provided via the first light path. Additionally or alternatively, the display device 120 may be configured to provide external information, such as information provided by an external tool or sensor, or a user interface of the microscope system. For example, the display device may be one of a Liquid Crystal Display (LCD)-based display device, an Organic Light-Emitting Diode (OLED)-based display device and a projection-based display device. The display device 120 is configured to output the visual representation of the image data captured by the two image sensor assemblies 130 of the microscope. For example, the display device 120 may be configured to output the image data captured by the two image sensor assemblies 130 of the microscope. In this case, no further image processing (e.g. by the system 190) may be necessary. In some examples, however, the system 190 may be used to process the image data provided by the two image sensor assemblies. In other words, the system 190 may be configured to process the image data provided by the two image sensor assemblies, and to provide a display signal to the display device. The display device may be configured to provide the visual representation based on the display signal. For example, the system 190 may be configured to highlight one or more portions of the image data within the display signal, e.g. to add an overlay representing fluorescence emissions on top of a white light-image. For example, the system 190 may be configured to apply sharpening and/or denoising on the image data.

In general, the microscope may be configured to provide a stereoscopic view on the sample being viewed through the microscope - on the one hand, the optical view on the sample may be a stereoscopic view, on the other hand, a digital stereoscopic view may be provided by the display device. In other words, the display device may be configured to provide a stereoscopic view on the image data via the eyepiece of the microscope. For example, the display device may comprise two displays, with each display being configured to provide one side of the stereoscopic view. Alternatively, the display device may comprise a single display, with a first portion of the display being configured to provide one side of the stereoscopic view, and with another portion of the display being configured to provide the other side of the stereoscopic view. The two sides of the stereoscopic view may be guided towards the eyepiece via the second light path. For example, the second light path may extend between the display device and the optical element. Alternatively, if the optical element is a tiltable/moveable mirror, the second light path may extend between the display device and the eyepiece, via the optical element, if the mirror is placed into a position that guides the visual representation towards the eyepiece.

The image data is generated by the two image sensor assemblies, based on a portion of the light that is guided via the first light path. Accordingly, that portion of the light guided via the first light path may be branched off (split off) from the first light path. As mentioned above, the microscope comprises the beam-splitting optical element 135 (e.g. a beam-splitter) configured to split a portion of light guided on the first light path off towards the two image sensor assemblies (e.g. via a third light path 114). The two image sensor assemblies, on the other hand, may be configured to generate the image data based on the portion of the light that is guided towards the two image sensor assemblies via the third light path. For example, the two image sensor assemblies may be configured to provide the image data to the display device 120, or to the system 190.

In various examples, the portion of the light guided via the first light path may be split off from the light path before the light reaches the optical element, i.e. between the objective and the optical element. In other words, the beam-splitting optical element may be arranged between the optical element and the objective of the microscope in the first light path. For example, as illustrated in more detail in connection with Figs. 2b and 3, the beam-splitting optical element may be arranged between an optical zoom element 150 of the microscope and the objective, or between the optical zoom element 150 of the microscope and the optical element 140.

In some microscopes, multiple eyepieces may be supported, e.g. a main eyepiece for the main surgeon, and an auxiliary eyepiece for an assistant. In the microscope shown in the present disclosure, the auxiliary eyepiece may be a (purely) digital eyepiece, e.g. without an optical path between the digital eyepiece and the sample. Alternatively or additionally, the microscope may comprise an outward facing display. For example, the digital eyepiece, and the outward-facing display, may be implemented by a second display device. For example, as shown in Fig. 3, the microscope may comprise a second display device 125 configured to output a second visual representation of the image data. For example, the second visual representation of the image data may contain the same images as the first visual representation. Alternatively, the first and second visual representation may differ regarding the images shown. For example, the first and second visual representation may differ regarding the information overlay being shown.

The microscope comprises the optical element 140, which configured to provide the light guided via the first light path and/or the visual representation of the image data guided via the second light path to the eyepiece. As has been pointed out before, the optical element may be a moveable mirror configured to provide either the light guided via the first light path or the visual representation of the image data guided via the second light path to the eyepiece. The moveable mirror may be moveable between a first position and a second position, the first position allowing the light guided via the first light path to reach the eyepiece without intersecting the optical element, and the second position allowing the visual representation provided by the display device to reach the eyepiece via the optical element. For example, in the second position, the light guided via the first light path may be blocked or deflected by the optical element. Alternatively, the optical element 140 may be a moveable beam splitter, and the light guided via the first light path may traverse the optical element when the optical element is in the second position. For example, the position of the optical element may be controlled by the user. For example, the system may be configured to control the position of the optical element, based on an input of a user of the microscope.

In some examples, the optical element may be a (static) beam splitter configured to provide the visual representation of the image data guided via the second light path overlaid over the light guided via the first light path to the eyepiece. In other words, in this case, the light guided via the first optical may (always) traverse the optical element, and the visual representation may be reflected towards the eyepiece by the optical element, thus overlaying the visual representation over the light guided via the first light path.

In various examples, the eyepiece may further comprise one or more additional optical element, for adjusting the focus on the optical (and digital) view on the sample.

In general, the microscope may comprise one or more additional optical elements. For example, one major functionality of a microscope is the provision of an enlarged view on the sample. In general, the enlarged view on the sample may be adjusted, by adjusting the factor by which the view is enlarged. In laboratory microscopes, this may be done by changing the objective being used. In surgical microscopes, the microscope may comprise an optical zoom element for continuously adjusting the zoom provided by the microscope.

In other words, the microscope may comprise an optical zoom element 150 (as shown in Figs. 1b, 2b and 3). For example, the optical zoom element may comprise one or more optical components and a mechanical apparatus, the mechanical apparatus being configured to adjust a positioning of the one or more optical components relative to each other and relative to the objective.

In general, there are two positions that the optical zoom element can be placed at - between the objective and the beam-splitting optical element, so both the optical view and the digital view use the same zoom element, or two optical zoom elements that are placed between the beam-splitting optical element and the optical element, and between the beam-splitting optical element and the two image sensor assembles. For example, in a microscope with a single optical zoom element, optical zoom element may be arranged between the beam-splitting optical element and the objective of the microscope in the first light path.

There are various types of optical zoom elements that can be employed in the microscope. For example, the optical zoom element may be a parfocal optical zoom element. In contrast to an afocal zoom element, a parfocal zoom element may enable to magnify a view on a sample while keeping the focus of the view. As the view remains in focus, e.g. manual refocusing might be not necessary after zooming. Hence, a parfocal zoom element may provide an optical zoom which enables generating sharp images with different magnifications. For example, the parfocal zoom element may be used to project a real image (i.e. an image that is in focus) onto the surfaces of the image sensors of the two image sensor assemblies. After the beam-splitting optical element, the light may be projected into infinity, to be re-focused using the optical elements of the eyepiece. Alternatively, the optical zoom element may be an afocal optical zoom element. In this case, one or more additional optical elements, which might not be necessary in case a parfocal zoom is used, may be placed within the third light path.

In the examples shown in Figs. 1b, 2a, 2b and 3, a parfocal zoom system 150 is used as optical zoom element 150. In other words, the microscope may comprise an optical zoom element 150 (which is arranged in the second portion of the first light path, between the first reflecting element 170-1 and the beam-splitting optical element 135), and which may be a parfocal zoom system. The functionality of such a parfocal zoom system is introduced in more detail in connection with Figs. 2a and 2b, with Fig. 2a showing the respective optical elements of an exemplary parfocal zoom system in more detail.

In general, the parfocal zoom system may be used to project an image that is in focus (i.e. a "real image" onto the respective image sensors of the two image sensor assemblies, via the beam-splitting optical element. In other words, may be beam-splitting optical element is configured to split the light being guided on the first light path into a first portion and a second portion. The parfocal zoom system may be configured to generate a real image on a surface of (an image sensor of) the at least one sensor assembly via the beam-splitting optical element. Accordingly, the real image may be based on the first portion.

As shown in Figs. 1b, 2a, 2b and 3, the microscope may further comprise an optical system 155 configured to receive the second beam portion and guide the second beam portion along the first light path. For example, the optical system 155 may comprise the second and third reflecting elements. Additionally, the optical system may comprise a lens (also shown as 208a in Fig. 2a) configured to project an intermediate image in the second beam portion to infinity. Furthermore, the optical system may comprise a tube lens (208b in Fig. 2a) configured to focus the second beam portion to a further intermediate image, and an ocular (208c) to view the further intermediate image. For example, the eyepiece 102 may comprise the ocular.

Alternatively, as has been mentioned above, separate optical zoom elements may be used (not shown). For example, the microscope may comprise a first and a second optical zoom element. The first optical zoom element may be arranged between the beam-splitting optical element and the eyepiece of the microscope in the first light path. The second optical zoom element may be arranged between the beam-splitting optical element and the two image sensor assemblies (in the third light path). Again, both optical zoom elements may be afocal or parfocal zoom elements. In an advantageous implementation, the first optical zoom element may be an afocal optical zoom element (as the focus of the optical view is controlled via the eyepiece) and the second optical zoom element may be a parfocal optical zoom element (so the real image can be directly projected onto the surfaces of the image sensors).

For example, the two image sensor assemblies may each comprise one or more (e.g. one or three) image sensors. In a simple implementation, each of the two image sensor assemblies may comprise a single image sensor. Alternatively, each of the two image sensor assemblies may comprise multiple, e.g. three, image sensors. In both cases, the image sensor(s) may comprise or be an APS (Active Pixel Sensor) - or a CCD (Charge-Coupled-Device)-based imaging sensor. For example, in APS-based image sensors, light is recorded at each pixel using a photodetector and an active amplifier of the pixel. APS-based image sensors are often based on CMOS (Complementary Metal-Oxide-Semiconductor) or S-CMOS (Scientific CMOS) technology. In CCD-based image sensors, incoming photons are converted into electron charges at a semiconductor-oxide interface, which are subsequently moved between capacitive bins in the image sensor by a control circuitry of the image sensor to perform the imaging. The image data may be obtained by receiving the image data from the image sensor (e.g. via the interface 192), by reading the image data out from a memory of the image sensor (e.g. via the interface 192), or by reading the image data from a storage device 196 of the system 190, e.g. after the image data has been written to the storage device 196 by the image sensor or by another system or processor.

In some examples, the two image sensor assemblies may employ a complex setup, in which different spectral portions of the light provided via the third light path are guided to different image sensors of the respective image sensor assemblies. For example, the two image sensor assemblies may each comprise a beam-splitter assembly and three image sensors. The beam-splitter assembly may be configured to guide light of a first spectral portion (of the overall spectrum) to the first image sensor, light of a second spectral portion to the second image sensor and light of a third spectral portion to the third image sensor. For example, the three image sensors may be configured to generate the image data based on the spectral portions incident to the respective image sensors. For example, the system may be configured to process the image data that is based on the spectral portions incident to the respective image sensors, and to generate the display signal based by generating a white light image (visible light image) with optical overlays representing fluorescence emissions by one or more fluorophores. For example, the microscope may be configured to perform reflectance imaging and fluorescence imaging. For example, fluorescence emission of different fluorophores may be guided towards different image sensors of the image sensor assemblies. To generate a display signal that represents a white light image and a fluorescence imaging overlay, the system may use the image data of one of the image sensors (that covers the spectrum used by the respective fluorescence emissions) to generate the fluorescence imaging overlay, and the image data of the remaining image sensors to generate the white light image. If two fluorophores are used, the system may use the image data of a first image sensor (that covers the spectrum used by the fluorescence emissions of a first fluorophore) to generate a first fluorescence imaging overlay, the image data of a second image sensor (that covers the spectrum used by the fluorescence emissions of a second fluorophore) to generate a second fluorescence imaging overlay, and the image data of the remaining image sensor to generate the white light image. The white light image and the fluorescence imaging overlay(s) may be combined and used to generate the display signal.

The interface 192 may correspond to one or more inputs and/or outputs for receiving and/or transmitting information, which may be in digital (bit) values according to a specified code, within a module, between modules or between modules of different entities. For example, the interface 192 may comprise interface circuitry configured to receive and/or transmit information. In embodiments the one or more processors 194 may be implemented using one or more processing units, one or more processing devices, any means for processing, such as a processor, a computer or a programmable hardware component being operable with accordingly adapted software. In other words, the described function of the one or more processors 194 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 196 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the microscope and of the microscope system are mentioned in connection with the proposed concept or one or more examples described above or below (e.g. Fig. 2 to 7). The microscope and the microscope system may comprise one or more additional optional features corresponding to one or more aspects of the proposed concept or one or more examples described above or below.

In the following, different implementations of the microscope shown in Figs. 1a to 1c are shown. Figs. 2a to 3 show schematic diagrams of further examples of microscopes.

In particular, in Figs. 2a and 2b, a parfocal zoom system of a microscope and the microscope comprising the parfocal zoom system are shown.

Referring back to Fig. 1b, to put the parfocal zoom system in context, Fig. 1b shows a microscope 100 with a parfocal zoom element (i.e. parfocal zoom system 150), a beam-splitting optical element 130, at least one image sensor assembly 130 and an optical system 155. The microscope 100 can be used for observing an object with the image sensor assembly 130 and the optical system 155, simultaneously. The parfocal zoom system 150 is configured to receive a beam of light corresponding to the object and may enable an optical zoom for the microscope 100. For example, the beam of light may comprise parallel beams. The parfocal zoom system 150 of Fig. 1b is now explained in more detail with reference to Figs. 2a to 2b.

The parfocal zoom system 150 of Fig. 2a is configured to generate a real image on a surface of an image sensor assembly 130 wherein the real image is based on a first beam portion. The parfocal zoom system 150 may generate converging beams which can be split into two separate beams by the beam splitter 135. The first beam portion can be used for generating the real image on the surface of the image sensor assembly 130. Generally, a real image can be generated by a converging optical element if an object or image is placed outside the focal length of the converging optical element.

The beam splitter 135 can further direct a second beam portion outside the parfocal zoom system 150. The second beam portion can be received by the optical system 155 to provide a viewable output beam. By providing the viewable output beam a virtual image can be viewed. The virtual image may have the same image content compared to the real image generated on the surface of the image sensor assembly 130. The virtual image may have a different magnification compared to the real image e.g. due to imaging properties of the optical system 155. The virtual image and the real image can be generated on different imaging planes at different locations. Generally, a virtual image can be generated by using diverging or converging optical elements. To generate a virtual image with e.g. a converging lens, an object or image shall have a position inside the focal length of the converging lens.

The microscope 100 may provide an observer a true optical zoom by the parfocal zoom system 150 and two features for observing the object by the image sensor assembly and the optical system 155. By this means, sharp magnified images of the object can be generated and observed in two different ways.

The observation of the object by using the image sensor assembly 130 can be advantageous e.g. for displaying the real image of the object. Displaying the real image might be suitable to provide the real image for more than one observer. For example in surgery, images of anatomical structures can be displayed on a screen which can be observed by several physicians simultaneously. Sensors can be also beneficial to observe light which are invisible for the human eye. For example, image sensor assemblies 130 can be sensitive to e.g. visible, infrared or ultraviolet light such as CCD-sensors, CMOS-sensors, photodiodes or other arbitrary sensors suitable for imaging.

In the following, observing the object by using the optical system 155 is discussed in further detail.

Fig. 2a shows another embodiment of a microscope 200, wherein the optical system 155 comprises a lens 208a configured to project an intermediate image in the second beam portion to infinity. The described converging beams generated by the parfocal zoom system 150 can be used to generate the intermediate image e.g. in front of the lens 208a. The lens 208a can project the intermediate image to infinity by generating an infinite beam. The infinite beam might be advantageous to project the intermediate image along a greater distance within the microscope 200. By this means, microscopes can be constructed e.g. with greater flexibility. For example, eyepieces can be placed according to ergonomic requirements such that an observer might be able to view the further intermediate image with a convenient head position.

In the embodiment of the microscope 200, the optical system 155 comprises a tube lens 208b configured to focus the second beam portion to a further intermediate image. The infinite beam generated by the lens may have an infinity focus. The tube lens 208b can be used to project the infinite beam again into a converging beam. By using the converging beam, the further intermediate image with a finite focus can be generated within the microscope 200. The further intermediate image can be further used for providing the viewable output beam.

In the embodiment of the microscope 200, the optical system 155 comprises an ocular 208c (of the eyepiece 104 of the microscope) to view the further intermediate image. The further intermediate image may correspond to a real image within the microscope 200. The ocular 208c can project the real further intermediate image into the virtual image. By this means, the further intermediate image can be viewable for e.g. human eyes. Due to the ocular 208c, the virtual image may have a higher magnification compared to the real image being generated on the surface of the image sensor assembly 130. Hence, the ocular 208c may also have an influence on the magnification capability of the microscope 200.

In another implementation, the optical system 155 comprises only the ocular 208c without having the lens 208a and the tube lens 208b. This might be appropriate, if it is desired to reduce the size of the microscope or for other construction related reasons.

In the shown embodiment, the microscope 200 further comprise an objective 102 configured to project a first image of the object which is viewed by the parfocal zoom system 150. The objective 102 can be used to generate the beam of light out of incoming beams corresponding to the object. For example, incoming beams may be generated by reflection or emission of light. Reflected light may be due to illumination of the object by a light source. Emitted light may be due to fluorescence emission of the object e.g. excited by illumination. For example, the beam of light may comprise infinite beams which can be projected by the parfocal zoom system 150. In another implementation, the objective may generate other than infinite beams such as converging beams. Converging beams may be further projected to infinite beams e.g. by further optical elements. Generally, a characteristic of the beam of light may depend on optical elements which are placed in front of the parfocal zoom system 150.

Similar to the ocular 208c, the objective 102 may have an influence on the magnification capability of the microscope 200 due to the optical properties of the objective 102.

In an implementation of the microscope 200, the parfocal zoom system 150 comprises two movable lens systems and a fixed lens system. The moveable lens systems may be moved between the fixed lens system and the beam splitter 135 of the microscope 200.

In contrast to an afocal zoom system, the parfocal zoom system 150 may enable to magnify an image while keeping the focus of the image. As the image remains in focus, e.g. manual refocusing might be not necessary after zooming. Hence, parfocal zoom systems 150 may provide optical zoom which enables to generate sharp images with different magnifications. As parfocal zoom systems 150 may generate converging beams rather than infinite beams, the lens 208a can be used e.g. after beam splitting to generate infinite beams.

The parfocal zoom system 150 can be also beneficial for the construction of the microscope 200. For example, the parfocal zoom system 150 may enable a reduction of the size of the microscope 200 due to a compact assembling of optical elements. In contrast to parfocal zoom systems, afocal zoom systems project images to infinity. For this reason, an afocal zoom system often requires an additional lens to focus an image e.g. to a sensor plane. A parfocal zoom system can operate without using an additional lens as the parfocal zoom system can focus the image directly to the sensor plane. Therefore, the usage of a parfocal zoom system may be beneficial for assembling an microscope in a more compact design.

A change in position of one moveable lens system may need a change in position of the other movable lens system to generate the intermediate image at a fixed image plane .For example, in an initial condition, a sharp intermediate image may be generated at a defined image plane. If the moveable lens system is moved closer to the fixed lens system, the other moveable lens system may need to be moved closer to the beam splitter 135. As a consequence, the generated intermediate image can be sharp in the same image plane but e.g. of smaller size. Hence, the second moveable lens system may compensate the relocation of the first moveable lens system for appropriate focusing.

Lens systems such as the moveable lens systems or the fixed lens system may comprise one or more optical elements such as a combination of a concave and a convex lens. The parfocal zoom system 150 may comprise more than two moveable lens systems to provide a true zoom.

The microscope 200 may comprise the objective 102 to project a first image of the object to the parfocal zoom system 150. In other implementations, the objective 102 may be a component of e.g. a microscope comprising the microscope 100.

For example, the microscope 100 or 200 can be used in camera systems, in video systems, in microscopes such as stereoscopic microscopes or any arbitrary system to image, view, magnify or focus an object to be observed. Fig. 2b illustrates an embodiment of the microscope 200.

The microscope 200 shown in Fig. 2b comprises a light path 110 configured to guide light from an objective 102 of the microscope towards an eyepiece of the microscope (via a tube interface 106). The microscope comprises a first 170-1, a second 170-2 and a third 170-3 reflecting element (e.g. a mirror), with the first reflecting element is arranged to guide the light on the light path from a substantially vertical direction to a substantially horizontal direction, the second reflecting element being arranged to guide the light on the light path from a substantially horizontal direction to a substantially vertical direction, and the third reflecting element being arranged to guide the light on the light path from a substantially vertical direction to a substantially horizontal direction. The reflecting elements subdivide the light path. Consequently, the light path comprises a first 110-1, second 110-2, third 110-3 and fourth 110-4 portion. The first portion is located between the objective and the first reflecting element, the second portion is located between the first and the second reflecting element, the third portion is located between the second and the third reflecting element and the fourth portion is located between the third reflecting element and the eyepiece. As can be seen in Fig. 2b, at least a sub-portion of the second portion and a sub-portion of the fourth portion are arranged in an anti-parallel manner. The microscope in Fig. 2b further comprises a beam-splitting optical element 135 (i.e. a beam splitter) configured to split off a portion of the light guided on the light path towards at least one image sensor assembly 130 of the microscope. In Fig. 2b, the beam-splitting optical element being arranged in the second portion of the light path.

The object can be placed on a microscope stage and can be imaged by a main lens group. The main lens group may comprise one or more optical elements such as the objective 102 and e.g. further lenses or filters. The beam of light may be generated by the main lens group and may be reflected by a mirror (i.e. the first reflecting element) to reach the parfocal zoom system 150. The parfocal zoom system 150 may generate a converging beam which can be split into two beam paths by the beam splitter 135. The first beam portion can be used to generate the real image of the object on the surface of the image sensor assembly. The second beam portion can be used by the optical system comprising e.g. the lens 208a, the tube lens 208b and the ocular 208c to provide the viewable output beam. By this means, the virtual image can be viewed by using an interface. The microscope may comprise further elements than described or illustrated such as further lenses, further beam splitter, further sensors, apertures, prisms, mirrors, filters, tubes, light sources or any arbitrary components for the technical construction of a microscope.

More details and aspects of the parfocal zoom system and of the microscope are mentioned in connection with the proposed concept or one or more examples described above or below (e.g. Fig. 1a to Id, 3 to 6). The parfocal zoom system and/or the microscope may comprise one or more additional optional features corresponding to one or more aspects of the proposed concept or one or more examples described above or below.

Fig. 3 shows a schematic diagram of another example of a microscope 300. For example, the microscope 300 may be implemented similar to the microscope introduced in connection with Figs. 1a to 2. The microscope comprises a first light path 110 configured to guide light from an objective 102 of the microscope towards an eyepiece of the microscope (via a tube interface 106). The microscope comprises a display device 120 configured to output a visual representation of image data captured by two image sensor assemblies 130 of the microscope. The image data is based on a portion of the light that is guided via the first light path. The microscope comprises a second light path 112 configured to guide the visual representation of the image data towards the eyepiece. The microscope comprises an optical element 140, configured to provide the light guided via the first light path and/or the visual representation of the image data guided via the second light path to the eyepiece.

The microscope 300 of Fig. 3 uses the same optical zoom element for the optical view and the digital view. In other words, the microscope comprises an optical zoom element 150, which is arranged between the beam-splitting optical element and the objective of the microscope in the first light path. Accordingly, the light is split after the zoom is performed. In the case of the microscope of Fig. 3, the optical zoom element 150 is a parfocal optical zoom element. For example, the optical zoom element may provide a visible light and infrared light corrected parfocal zoom. The tube lens (of the eyepiece) might only correct for visible light. The beam-splitting optical element 135 is thus arranged between the optical zoom element and the optical element, and thus also between the optical element and the objective, and configured to split a portion of light guided on the first light path off towards the two image sensor assemblies.

In Fig. 3, the back assistant is provided with a pure stereoscopic digital view (via a second display device 125 configured to output a second visual representation of the image data). A switchable mirror may implement the optical element 140, and may be used for the eyepiece of the main surgeon. For example, an LED-based illumination system (as shown in Fig. 4) may be used for critical illumination with separate excitation and fluorescence excitation illumination. The side assistant may be provided with a shared display of the view of the main surgeon or with an independent display. Fig. 3 further shows the optical system 155 that is introduced in more detail in connection with Figs. 1a to 2b.

The microscope of Fig. 3 provides a compact implementation, by leading the first light path in a meandering manner through the microscope. To achieve this, the microscope comprises a first 170-1, a second 170-2 and a third 170-3 reflecting element, with the first reflecting element being arranged to guide the light on the first light path from a substantially vertical direction to a substantially horizontal direction, the second reflecting element being arranged to guide the light on the light path from a substantially horizontal direction to a substantially vertical direction, and the third reflecting element being arranged to guide the light on the light path from a substantially vertical direction to a substantially horizontal direction. Thus, the first light path is separated by the reflecting elements into different portions. Consequently, the first light path comprises a first 110-1, second 110-2, third 110-3 and fourth 110-4 portion. The first portion is located between the objective and the first reflecting element, the second portion is located between the first and the second reflecting element, the third portion is located between the second and the third reflecting element and the fourth portion is located between the third reflecting element and the eyepiece. At least a sub-portion of the second portion and a sub-portion of the fourth portion are arranged in a substantially anti-parallel manner. As can be seen in Fig. 4, a portion of the second 110-2 and fourth 110-4 are arranged (horizontally) in an anti-parallel manner, i.e. both extending horizontally, above each other, with the light being directed in opposite horizontal (lateral) directions. In Fig. 3, the beam-splitting optical element is arranged in the second portion of the first light path.

Through this meandering structure, a small implementation of the microscope is achieved. However, the zoom design may be adjusted for this approach.

More details and aspects of the microscope are mentioned in connection with the proposed concept or one or more examples described above or below (e.g. Fig. 1a to 2b, 4 to 6). The microscope may comprise one or more additional optional features corresponding to one or more aspects of the proposed concept or one or more examples described above or below.

Fig. 4 shows a schematic diagram of an example of an illumination system 180 for a microscope. The illumination system 180 is an LED-based illumination system 180 that is suitable for microscope. For example, the illumination system 180 shown in Fig. 4 may be integrated within the microscopes and/or microscope systems shown in connection with Figs. 1a to 3. Particularly, the illumination system 180 shown in Fig. 4 may be located at the objective 102 of the microscopes shown in connection with Figs. 1a to 3.

The illumination system 180 of Fig. 4 is an LED-based illumination system being configured to emit radiation power having at least one peak at a wavelength that is tuned to an excitation wavelength of at least one fluorescent material and/or to emit radiation power across a white light spectrum. For example, the illumination system shown in Fig. 4 comprises one or more first LED-based light sources 181-1. The one or more first LED-based light sources are configured to emit radiation power across a white light color spectrum. The illumination system comprises at least one optical filter 181-2. The at least one optical filter is arranged to filter the light emitted by the one or more first LED-based light sources. For example, the light emitted across the white light spectrum may be filtered such that light having a wavelength (spectrum) that coincides with at least one fluorescence emission wavelength (spectrum) of the at least one fluorescent material is attenuated or blocked. The illumination system comprises one or more second LED-based light sources 182. The one or more second LED-based light sources are configured to provide light having at least one peak at a wavelength that is tuned to an excitation wavelength of at least one fluorescent material. Each LED-based light source 181-1; 182 (and optionally 183) may be configured to emit radiation power towards a sample to be observed via the microscope.

In microscope systems, illumination systems are generally used to illuminate the sample, e.g. a sample on a sample stage (in case of a laboratory microscope), or a patient on an operating table. Consequently, the light sources 181-1 and 182 (and, as introduced below, 183) may be configured to emit radiation power towards the sample to be observed via the microscope. In other words, the light emitted by the light sources may be directed at the sample, e.g. at the sample stage, or towards the patient. To avoid an overly wide beam angle of the light source, optical concentration elements may be used to direct the light towards the sample. In other words, each LED-based light source may be configured to emit the light towards the sample through an optical concentration element. In general, different kinds of optical concentration elements may be used, such as lenses, light guides, or parabolic concentrators. For example, compound parabolic concentrators may be used. In other words, the optical concentration element may be a compound parabolic concentrator (CPC), e.g. Total Internal Reflection (TIR)-based CPC. Compound parabolic concentrators are optical elements, having a hollow and parabolic shape, that are suitable for collecting and concentrating light from light sources, and that yield a pre-defined maximal angle at which the light is emitted from the compound parabolic concentrator. For example, each light source may be coupled with a compound parabolic concentrator, and the light of the light sources may be concentrated by the compound parabolic concentrator coupled with the light sources.

In general, the light sources being used in embodiments of the present disclosure are LED-based light sources. In general, an LED-based light source may comprise an LED, e.g. a surface mounted LED (i.e. a SMD LED), and a connection structure for electrically connecting the LED to an energy source. LEDs are usually connected to a driver circuit (usually an integrated circuit) that is configured to supply the LED with energy, i.e. with an electric current. In some embodiments, each light source may comprise a corresponding driver circuit. Alternatively, a common driver circuit may be used to supply (all of) the LEDs with energy. In any case, the driver circuit may be used to drive the LEDs at full intensity. Alternatively or additionally, the driver may be capable of driving the LEDs with less than full intensity, which is denoted "dimming". In general, in illumination systems for microscopes, different levels of light intensity may be desired, so the light sources may be dimmable, i.e. a driver circuit of the light sources may be capable of driving the LEDs with less than full intensity, e.g. in response to a control signal from a control device. Various approaches may be used for the dimming, such as electric current-based dimming, or pulse-width modulation-based dimming. For example, the system 190, e.g. one or more processors 194 of the system 190, shown in Fig. Id, may be configured to control the light sources. As individual light sources are being used, the light sources may be controlled independently from each other (if each light source has their own driver circuit), or at least in groups (e.g. if the first and second light sources have different driver circuits, or are independently controllable via a single driver circuit). Accordingly, the one or more processors 194 (or, more generally, the system 190) may be configured to control the one or more first and the one or more second LED-based light sources independent from each other.

The illumination system comprises different groups (or sets) of light sources. For example, the illumination system comprises a first group or set of light sources comprising the one or more first LED-based light sources 181-1, and a second group or set of light sources comprising the one or more second LED-based light sources 182. In some embodiments, as also shown in Fig. 4, the illumination system may even comprise a third group or set of light sources comprising one or more third LED-based light sources 183.

In general, the light sources (or groups/sets) of light sources may be distinguished by the light spectra they emit, or by the light spectra they emit after being filtered by one of the filters. For example, the one or more first LED-based light sources are configured to emit radiation power across the white light color spectrum. In other words, the one or more first LED-based light sources may be configured to emit radiation power at a continuous wavelength band that continually spans at least 90% of the wavelength band between 380 nm and 740 nm. The one or more first LED-based light sources may be broad-band light sources emitting light in a continuous wavelength band spanning at least a 300 nm range. In more generic terms, the one or more first LED-based light sources may be denoted "white light" LEDs, i.e. LEDs that emit radiation power that is perceived as being "white light" due to the inclusion of a wide wavelength band.

The one or more second LED-based light sources are different - they emit radiation power having at least one peak at a wavelength that is tuned to an excitation wavelength of at least one fluorescent material. Accordingly, the one or more second LED-based light sources may be denoted "fluorescence excitation light sources". In other words, the one or more second LED-based light sources may be narrow-band light sources (i.e. they emit at one or multiple wavelength bands each spanning less than a 100 nm wavelength range). This may be achieved using different approaches. For example, the light sources may be light sources that only emit radiation power in a narrow band, without using a filter. In other words, at least a subset of the one or more second LED-based light sources may be configured to provide light having at least one peak at a wavelength that is tuned to an excitation wavelength of the at least one fluorescent material without using a filter to limit the emitted light to the at least one peak. In other words, at least a subset of the one or more second LED-based light sources may comprise LEDs that are configured to emit radiation power in a narrow band (i.e. less than a 100 nm wavelength range, or less than a 50 nm wavelength range). Alternatively or additionally, filters may be used with a subset of the one or more second LED-based light sources. In other words, as further shown in Fig. 4, the illumination system (e.g. at least a subset of the one or more second LED-based light sources) may comprise a second optical filter 184 (e.g. at least one second optical filter 184), arranged to filter the light emitted by at least a subset of the one or more second LED-based light sources. For example, the second filter may be configured to limit the light emitted by at least a subset of the one or more second LED-based light sources to the at least one peak at a wavelength that is tuned to an excitation wavelength of the at least one fluorescent material. In some embodiments, the two approaches may be combined - for a subset of the fluorescent materials, a light source without a filter may be used (as a sufficiently narrow-band light source is available), for another subset of the fluorescent materials, a filter may be used to (further) limit the emitted wavelengths. For example, In the context of this application, the term "light having at least one peak at a wavelength that is tuned to an excitation wavelength of at least one fluorescent material" may be understood as the light having its highest intensity at a wavelength or wavelength band that intersects with an excitation wavelength or wavelength band of at least one fluorescent material, with light at other wavelengths being emitted at an intensity that is at most 80% (or at most 50%, at most 20%, at most 10%) of the highest intensity.

In general, the light emitted by the one or more second LED-based light sources is tuned to the excitation wavelength/wavelengths of at least one fluorescent material. Fluorescent materials are often used in microscopy to highlight a portion of a tissue or a blood vessel that has been previously marked using a fluorescent material. For example, a fluorescent dye, such as fluorescein, indocyanine green (ICG) or 5-ALA (5-aminolevulinic acid) may be used to mark the tissue or vessel. In other words, the at least one fluorescent material may be at least one fluorescent dye. Fluorescent materials are materials that are excited by light at one wavelength/in a first wavelength band (i.e. their "excitation wavelength"), but emit radiation power in another wavelength band (i.e. their "emission wavelength"). Thus, the one or more second LED-based light sources emit radiation power that has its peak at the excitation wavelength/wavelengths of the fluorescent materials. For typically used fluorescent dyes, the excitation wavelength may be between 390 nm and 420 nm, between 460 nm and 500 nm, or between 780 nm and 810 nm. For example, in an example shown in Figs. 3a and 3b, three different second LED-based light sources are used, having their respective peaks at 405 nm, 480 nm and 788 nm. Accordingly, the one or more second LED-based light sources may be configured to emit radiation power having a peak at one or more of between 390 nm and 420 nm, between 460 nm and 500 nm, and between 780 nm and 810 nm. For example, different light sources of the one or more second LED-based light sources may emit radiation power having a peak at different excitation wavelength/wavelengths of different fluorescent materials. In this case, these different light sources may be controlled mutually independently from each other by the system 190 / one or more processors 194.

To avoid the one or more first LED-based light sources drowning out the light emitted by the fluorescent materials, light in the emission wavelength bands of the at least one fluorescent material may be filtered out from the light emitted by the one or more LED-based light sources. In other words, the at least one optical filter may be configured to attenuate or block light having a wavelength (spectrum) that coincides with at least one fluorescence emission wavelength (spectrum) of the at least one fluorescent material. Accordingly, the at least one optical filter may be configured to attenuate or block light within a wavelength band between 490 nm and 560 nm, and/or the at least one optical filter may be configured to attenuate or block light within a wavelength band between 610 nm and 660 nm. The wavelength bands between 490 nm and 560 nm, and between 610 and 660 nm may be emission wavelength bands of common fluorescent dyes. In consequence, the first and second sets of light sources may be used concurrently, and the fluorescence emissions may still be visible, as the corresponding portions of the light emitted by the first group or set is filtered out. Accordingly, the at least one optical filter may be arranged in a light path between the one or more first LED-based light sources and a sample to be perceived through the microscope. Furthermore, the at least one optical filter may be arranged to filter the light emitted by each of the one or more first LED-based light sources, i.e. none of the light emitted by the one or more first lights sources may bypass the at least one optical filter. For example, the at least one optical filter may be a bandpass filter. Alternatively, the at least one optical filter may comprise multiple bandpass filters, one for each of the following wavelength bands: between 490 nm and 560 nm, between 610 nm and 660 nm, and between 750 and 1000 nm. One or more of the above-referenced bandpass filters may be used (or combined), depending on which fluorophore is being used. This can be achieved by e.g. by using a filter wheel, or by arranging different bandpass filters in front of different first LED light sources.

In some embodiments, as further shown in Fig. 4, a third set or group LED-based light sources 183 may be used. In other words, the illumination system 180 may comprise one or more third LED-based light sources 183. The one or more third LED-based light sources may be configured to emit radiation power across the white light color spectrum. Accordingly, the one or more third LED-based light sources may be implemented similar to the one or more first LED-based light sources. The light emitted by third set or group LED-based light sources, however, might not be filtered by the at least one optical filter. Consequently, light emitted by the one or more third LED-based light sources may reach the sample across the (entire) white light color spectrum.

To achieve redundancy and an even illumination of the sample, multiple light sources of each of the groups or sets light sources may be included in the illumination system. For example, the illumination system may comprise two or more first LED-based light sources and two or more second LED-based light sources (and, optionally, two or more third LED-based light sources). In some embodiments, even higher numbers may be used, e.g. four or six first LED-based light sources, four or six first LED-based light sources, and/or four or six third LED-based light sources. In Figs. 5, an example is shown where two first LED-based light sources, six second LED-based light sources and two third LED-based light sources are used. The light sources of each group or set may be arranged at either side of an objective 102 of the microscope. For example, at least one LED-based light source for each wavelength band (e.g. one first LED-based light source, one third LED-based light source, and three second LED-based light sources for three excitation wavelengths of three fluorescent materials, as shown in Fig. 4) may be arranged at either side of the objective. In other words, at least one of the two or more first LED-based light sources and at least one of the two or more second LED-based light sources (and optionally at least one of the two or more third LED-based light sources) may be arranged at a first side of the objective, and at least one of the two or more first LED-based light sources and at least one of the two or more second LED-based light sources (and optionally at least one of the two or more third LED-based light sources) may be arranged at a second side of the objective. For example, the first side and the second side may be opposing sides relative to the objective of the microscope.

The filters being employed with the one or more first LED-based light sources lead to an illumination of the sample (e.g. of the surgical site) that is non-uniform across the white-light spectrum. This non-uniformity may be compensated in image-processing, e.g. by the system 190. Fig. 1d further shows a schematic diagram of an embodiment of the system 190 that is suitable for the microscope. Fig. 1c further shows a system comprising the illumination system 180 and the system 190. The system 190 comprises one or more processors 194 and one or more storage devices 196. Optionally, the system 190 comprises an interface 192. The one or more processors 194 are coupled to the interface 192 and to the one or more storage devices 196. In general, the one or more processors may be configured to provide the functionality of the system 190, e.g. in conjunction with the one or more storage devices and/or in conjunction with the interface.

For example, the system may be configured to obtain image data of an optical imaging sensor 130 of the microscope (e.g. via the interface 192). Accordingly, the system 190 may be coupled to the microscope, e.g. via the interface 192. The image data represents light reflected by a sample that is illuminated by one or more LED-based light sources. The light emitted by the one or more LED-based light sources is filtered such that light having a wavelength (spectrum) that coincides with at least one fluorescence emission wavelength (spectrum) of the at least one fluorescent material is attenuated or blocked. The system may be configured to process the image data to generate processed image data.

In some embodiments, the system 190, e.g. the one or more processors 194 may be configured to control the one or more first and the one or more second LED-based light sources. Accordingly, the system 190, e.g. the one or more processors 194, may be coupled to the illumination system 180, e.g. via the interface 192. For example, the illumination system may comprise one or more processors 194 (e.g. the system 190) configured to control the one or more first and the one or more second LED-based light sources independent from each other. For example, at least one of an on-off-state and a light intensity may be controlled independently for the one or more first and the one or more second LED-based light sources (and optionally for the one or more third LED-based light sources). More precisely, an on-off-state and/or a light intensity for the one or more first LED-based light sources may be controlled independently from an on-off-state and/or a light intensity for the one or more second LED-based light sources (and optionally from an on-off-state and/or a light intensity for the one or more third LED-based light sources). In some embodiments, each LED-based light source may be controlled independently from each other (or at least independently from LED-based light sources of other groups or sets).

More details and aspects of the illumination system are mentioned in connection with the proposed concept or one or more examples described above or below (e.g. Fig. 1a to 3, 5 to 6). The illumination system may comprise one or more additional optional features corresponding to one or more aspects of the proposed concept or one or more examples described above or below.

Fig. 5 shows a flow chart of an example of a method for imaging an object using a microscope. For example, the microscope may be one of the microscopes introduced in connection with Figs. 1a to 3. The method comprises guiding 510 light from an objective of the microscope towards an eyepiece of the microscope using a light path. The method comprises guiding 512 the light on the light path from a substantially vertical direction to a substantially horizontal direction using a first reflecting element. The method comprises guiding 514 the light on the light path from a substantially horizontal direction to a substantially vertical direction using a second reflecting element. The method comprises guiding 516 the light on the light path from a substantially vertical direction to a substantially horizontal direction using a third reflecting element. The light path comprises a first, second, third and fourth portion. The first portion is located between the objective and the first reflecting element. The second portion is located between the first and the second reflecting element. The third portion is located between the second and the third reflecting element. The fourth portion is located between the third reflecting element and the eyepiece. At least a sub-portion of the second portion and a sub-portion of the fourth portion are arranged in a substantially anti-parallel manner. The method comprises splitting 520 off a portion of the light guided on the light path towards at least one image sensor assembly of the microscope using a beam-splitting optical element, the beam-splitting optical element being arranged in the second or third portion of the light path.

For example, features introduced in connection with the Microscopes of Figs. 1a to 3, or with the illumination system introduced in Fig. 4, may likewise be applied to the method of Fig. 5.

More details and aspects of the method are mentioned in connection with the proposed concept or one or more examples described above or below (e.g. Fig. 1a to 4, 6). The method may comprise one or more additional optional features corresponding to one or more aspects of the proposed concept or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

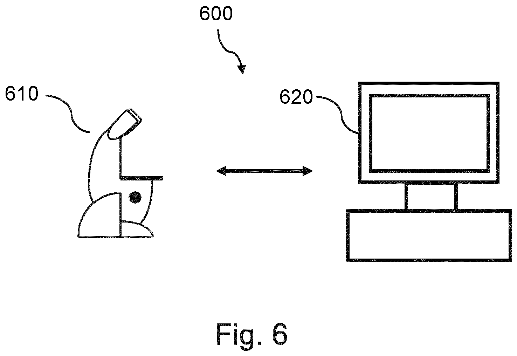

Some embodiments relate to a microscope comprising a system as described in connection with one or more of the Figs. 1 to 5. Alternatively, a microscope may be part of or connected to a system as described in connection with one or more of the Figs. 1 to 5. Fig. 6 shows a schematic illustration of a system 600 configured to perform a method described herein. The system 600 comprises a microscope 610 and a computer system 620. The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference Signs

- 100: Microscope
- 102: Objective
- 104: Eyepiece
- 106: Tube interface
- 110: First light path
- 112: Second light path
- 114: Third light path
- 120: Display device
- 125: Second display device
- 130: Image sensor assembly
- 140: Optical element / tiltable mirror
- 150: Optical zoom element
- 155: Optical system
- 170-1,: 170-2, 170-3 Reflecting elements
- 180: Illumination system
- 181-1: First LED-based light source(s)
- 181-2: Optical filter
- 182: Second LED-based light source(s)
- 183: Third LED-based light source(s)
- 184: Second optical filter
- 190: System for a microscope
- 192: Interface
- 194: One or more processors
- 196: One or more storage devices
- 200: Microscope
- 208a: Lens
- 208b: Tube lens
- 208c: Ocular
- 300: Microscope
- 510: Guiding light on a light path
- 512: Guiding the light from a substantially vertical direction to a substantially horizontal direction using a first reflecting element
- 514: Guiding the light from a substantially horizontal direction to a substantially vertical direction using a second reflecting element
- 516: Guiding the light from a substantially vertical direction to a substantially horizontal direction using a third reflecting element
- 520: Splitting off a portion of the light
- 600: System
- 610: Microscope
- 620: Computer system
- 1000: Microscope system

## Claims

1. A microscope comprising:
a light path (110) configured to guide light from an objective (102) of the microscope towards an eyepiece (104) of the microscope;
a first (170-1), a second (170-2) and a third (170-3) reflecting element, the first reflecting element being arranged to guide the light on the light path from a substantially vertical direction to a substantially horizontal direction, the second reflecting element being arranged to guide the light on the light path from a substantially horizontal direction to a substantially vertical direction, and the third reflecting element being arranged to guide the light on the light path from a substantially vertical direction to a substantially horizontal direction,
wherein the light path comprises a first (110-1), second (110-2), third (110-3) and fourth (110-4) portion, wherein the first portion is located between the objective and the first reflecting element, the second portion is located between the first and the second reflecting element, the third portion is located between the second and the third reflecting element and the fourth portion is located between the third reflecting element and the eyepiece, with at least a sub-portion of the second portion and a sub-portion of the fourth portion being arranged in a substantially anti-parallel manner; and
a beam-splitting optical element (135) configured to split off a portion of the light guided on the light path towards at least one image sensor assembly (130) of the microscope, the beam-splitting optical element being arranged in the second or third portion of the light path.

2. The microscope according to claim 1, comprising an optical zoom element (150) being arranged in the second portion of the light path.

3. The microscope according to claim 1, wherein the optical zoom element is a parfocal zoom system.

4. The microscope according to claim 3, wherein the parfocal zoom system is configured to generate a real image on a surface of the at least one sensor assembly via the beam-splitting optical element.

5. The microscope according to claim 4, wherein the beam-splitting optical element is configured to split the light being guided on the light path into a first portion and a second portion, the real image being based on the first portion, the microscope further comprising an optical system (155) configured to receive the second beam portion and guide the second beam portion along the light path.

6. The microscope according to claim 5, wherein the optical system comprises a lens (155) configured to project an intermediate image in the second beam portion to infinity.

7. The microscope according to claim 6, wherein the optical system comprises a tube lens configured to focus the second beam portion to a further intermediate image, and an ocular to view the further intermediate image.

8. The microscope according to one of the previous claims, comprising:
a display device (120) configured to output a visual representation of image data captured by the at least one image sensor assembly of the microscope, the image data being based on a portion of the light that is guided via the light path;
a second light path (125) configured to guide the visual representation of the image data towards the eyepiece; and
an optical element (140), configured to provide the light guided via the light path and/or the visual representation of the image data guided via the second light path to the eyepiece.

9. The microscope according to one of the claims 1 to 8, wherein the optical element is a moveable mirror configured to provide either the light guided via the first light path or the visual representation of the image data guided via the second light path to the eyepiece.

10. The microscope according to claim 1, wherein the optical element is a beam splitter configured to provide the visual representation of the image data guided via the second light path overlaid over the light guided via the first light path to the eyepiece.

11. A microscope system comprising the microscope according to one of the previous claims and a Light Emitting Diode, LED,-based illumination system, the LED-based illumination system being configured to emit radiation power having at least one peak at a wavelength that is tuned to an excitation wavelength of at least one fluorescent material and/or to emit radiation power across a white light spectrum, with the light emitted across the white light spectrum being filtered such that light having a wavelength spectrum that coincides with at least one fluorescence emission wavelength spectrum of the at least one fluorescent material is attenuated or blocked.

12. The microscope system according to claim 11, wherein each LED-based light source of the LED-based illumination system is configured to emit radiation power towards a sample to be observed via the microscope, wherein each LED-based light source is arranged adjacent to the objective of the microscope.

13. A method for imaging an object using a microscope, the method comprising:
guiding (510) light from an objective of the microscope towards an eyepiece of the microscope using a light path;
guiding (512) the light on the light path from a substantially vertical direction to a substantially horizontal direction using a first reflecting element;
guiding (514) the light on the light path from a substantially horizontal direction to a substantially vertical direction using a second reflecting element;
guiding (516) the light on the light path from a substantially vertical direction to a substantially horizontal direction using a third reflecting element;
wherein the light path comprises a first, second, third and fourth portion, wherein the first portion is located between the objective and the first reflecting element, the second portion is located between the first and the second reflecting element, the third portion is located between the second and the third reflecting element and the fourth portion is located between the third reflecting element and the eyepiece, with at least a sub-portion of the second portion and a sub-portion of the fourth portion being arranged in a substantially anti-parallel manner; and
splitting (520) off a portion of the light guided on the light path towards at least one image sensor assembly of the microscope using a beam-splitting optical element configured to, the beam-splitting optical element being arranged in the second or third portion of the light path.
